# EUROPEAN PATENT APPLICATION

(11) **EP 3 151 075 A1**
(43) Date of publication of application: **05.04.2017**
(21) Application number: 15187407.0
(22) Date of filing: 29.09.2015
(51) Int. Cl.: G05B 19/418, G06Q 10/06

(54) **METHOD, DIGITAL TOOL AND AUTOMATION DEVICE FOR MANAGING AND OPERATING JOB SHOP TYPE OF PRODUCTION WITHIN THE INFRASTRUCTURE OF A PLANT**

(71) Applicant: Siemens Aktiengesellschaft, 80333 München (DE)
(72) Inventor: Schönberger, Andreas, 96049 Bamberg (DE); Kob, Peter, 90562 Heroldsberg (DE); Lange, Sebastian, 90768 Fürth (DE); Neidig, Jörg, 90419 Nürnberg (DE); Scholz, Andreas, 85716 Unterschleißheim (DE)

(57) **Abstract**

In order to manage and operate job shop type of production within the infrastructure of a plant (PLT), which ensures an optimized coordination of the ordering of parts that go through individual production steps it is proposed to use a Managing/Operating-Program Module (MOPM) based particularly on an "APP capsule app", which is a framework app with an "App-in-app"-concept for optimization algorithms, that (i) runs on multiple machines such as at least one Programmable Logic Controller (PLC) or an "Industrial PC" (IPC) of a Control Sub-System (CSS) being part of an Automation Device (AD) of at least one Production Unit (PU, PU_{X}, PU_{Y}, PU_{Z}) hosting each the Control Sub-System (CSS) and executing at least one Production Step (PS, PSₙ₋₂, PSₙ₋₁, PSₙ) and (**ii**) allows to share information about parts at the respective Production Step and to run the optimization algorithms that optimize the order in which parts are worked on at the respective steps.

To detect the parts a tag is used preferably that travels along with the part.

In addition, a communication framework for setting up connections between individual workplaces is needed, if more than one Production Unit for the job shop type of production is used.

## Description

The invention refers to a method for managing and operating job shop type of production within the infrastructure of a plant according to the preamble of claim 1, a Digital Tool for managing and operating job shop type of production within the infrastructure of a plant according to the preamble of claim 10 and an Automation Device for managing and operating job shop type of production within the infrastructure of a plant according to the preamble of claim 19.

For managing and operating job shop type of production within the infrastructure of a plant, in particular industrial plants or interconnected medical systems, respectively for optimizing the production in job-shop scenarios, the order of parts that go through the individual production steps must be coordinated. Otherwise, downstream production steps may not be performed because the necessary parts to be worked on are missing and the result is expensive loss of production capabilities. Beyond not being able to perform production steps at all, an additional problem is that production is suboptimal because of insufficient coordination between production steps. The intricacy of the second problem is that sub-optimality can come in different flavors and in essence is production context specific. For example, the uncoordinated production sequence in upstream production steps can result in many switching events in downstream production steps (switching from producing product A to product B) which may result in high switching costs. Another example is that downstream production steps cannot produce products with the highest priority because some parts have not yet been created in upstream production steps (because some other low-priority parts have been produced).

So far, this problem has been attacked by mainly three generally known approaches:

### Approach "A":

Adding large production step buffers to individual production steps that store the output of preceding production steps or that store the output of the focal production step. The idea of this approach is to store sufficient raw material or parts in the buffers to be able to keep individual production steps running. The drawback of this approach is on the one hand, that storing lots of raw material or parts in buffers is very costly and, on the other hand, that some parts may end up unused for a long time because they are not needed in subsequent production steps due to changes in the production plan.

### Approach "B":

In job-shop scenarios, semi-automated processes are the rule rather than the exception. The individual workers in the production step therefore are a source for coordination between the production steps because they (believe to) know when to produce which parts for an optimal production process. The drawback of this approach, defining manual procedures, is that the speed/quality of the production process is highly dependent on the skill and experience of the workers and therefore largely varying and that it takes a long time to react to changes in the production plan or to incidents in individual production steps. In addition, communication between workers is by far not as fast/repeatable/reliable as the automated communication between machines across the production process.

### Approach "C" :

The aim of this approach is to globally plan the complete production process up-front. Recently, this approach emerged because more and more computing power allows for exploring larger parts of the huge state space that results from combining the production possibilities of a network of production steps. This leads to the attempt to compute all possible production schedules upfront and then to select the optimum schedule according to some optimality criterion. However, this method does not scale for really large production scenarios, and is not fast enough to react to changes in the production plan/goals and not fast enough to react to incidents in production steps.

It is an object (objective) of the invention to propose a Method, Digital Tool and Automation Device for managing and operating job shop type of production within the infrastructure of a plant, which ensures an optimized coordination of the ordering of parts that go through individual production steps.

This object (objective) is solved based on a method defined in the preamble of claim 1 by the features in the characterizing part of claim 1.

The object (objective) is further solved based on a Digital Tool defined in the preamble of claim 10 by the features in the characterizing part of claim 10.

Moreover the object (objective) is solved based on an Automation Device defined in the preamble of claim 19 by the features in the characterizing part of claim 19.

The underlying idea of the invention according to the claims 1, 10 and 19 is to provide for managing and operating job shop type of production within the infrastructure of a plant a Managing/Operating-Program Module based particularly on an "APP capsule app", which is a framework app with an "App-in-app"-concept for optimization algorithms, that **(i)** runs on multiple machines such as at least one Programmable Logic Controller or an Industrial PC of a Control Sub-System being part of an Automation Device of at least one Production Unit hosting each the Control Sub-System and executing at least one Production Step and **(ii)** allows to share information about parts at the respective Production Step and to run the optimization algorithms that optimize the order in which parts are worked on at the respective steps.

To detect the parts a tag is used preferably that travels along with the part.

In addition, a communication framework for setting up connections between individual workplaces is needed, if more than one Production Unit for the job shop type of production is used.

The decisive components of a Production Step in the context of the idea underlying the invention are a

### I. Resource Buffer

Each Production Step has one or more Resource Buffers for storing raw material or the parts of preceding Production Steps.

### II. Control Sub-System

Each production step has the Control Sub-System that senses the environment, performs calculations based on state and sensed values and computes actions from that. This Control Sub-System is highly dependent on the machines used for a particular Production Step. However the Control Sub-System itself is not part of the invention. It rather hosts the Managing/Operating-Program Module based particularly on the "APP capsule app". The Control Sub-System resolves the dependencies of the Managing/Operating-Program Module based particularly on the "APP capsule app" and uses its interfaces for scheduling the local activities and for human-machine interaction.

### III. Managing/Operating-Program Module based particularly on the "APP capsule app"

The Managing/Operating-Program Module respectively the "APP capsule app" is itself an app that is loaded or implemented (hence it is integrated) into the Control Sub-System of the Production Unit executing a Production Step and defines a set of interfaces and dependencies for interaction with the Control Sub-System. The Managing/Operating-Program Module respectively the "APP capsule app" is able to host at least one Coordinating Program Module, in particular at least one coordination app. The Coordinating Program Module respectively the coordination app in turn encapsulates the domain-specific or project-specific logic to translate production plans or goals into recommendations for the local activities of the Production Step and if necessary for coordination events with preceding and subsequent Production Steps. The Coordinating Program Module respectively the coordination app is provided with a set of functionalities that stem from the dependencies of the Managing/Operating-Program Module respectively the "APP capsule app". In addition, the Coordinating Program Module respectively the coordination app is required to implement the interfaces of the Managing/Operating-Program Module respectively the "APP capsule app".

### IV. Output Buffer

Each Production Step has one or more Output Buffers for storing the output of the Production Step.

Hence according to the underlying idea of the invention the Managing/Operating-Program Module respectively the "APP capsule app" retrieves the information available through its dependencies, provides this information to the domain-specific/project-specific Coordinating Program Module respectively coordination app and then offers the computation results of the Coordinating Program Module respectively the coordination app through its interfaces.

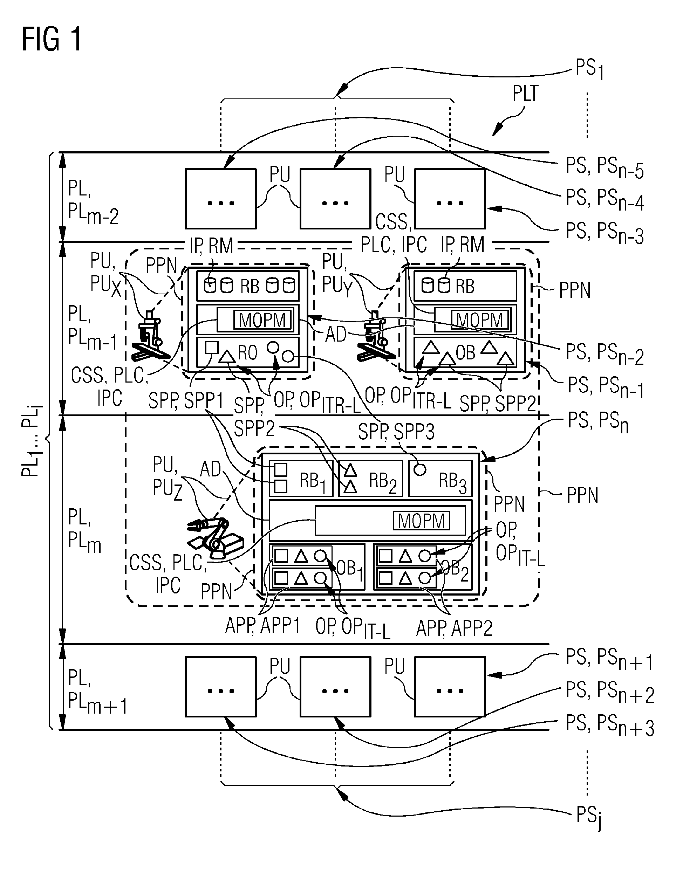

For example, let's assume that the production in a plant is supposed to minimize the fill rate of Output Buffers and Resource Buffers where the most costly products or parts are to be minimized first. Let's further assume that products of a dedicated Output Buffer, e.g. a first Output Buffer OB1 according to FIGURE 1, of a dedicated Production Step, e.g. an n-th Production Step PSₙ according to FIGURE 1, are the most expensive ones. Then, a production engineer could write the Coordinating Program Module respectively the coordination app for the Managing/Operating-Program Module respectively the "APP capsule app"of the Production Step PSₙ that first senses the state of the Output Buffer OB1, then checks if the production plan for the products of Output Buffer OB1 is already met and then decides whether more products for OB1 shall be produced. Let's assume further, that this Managing/Operating-Program Module respectively the "APP capsule app" decides that no further products for the Output Buffer OB1 for the Production Step PSₙ shall produced. The Coordinating Program Module respectively the coordination app then would signal to previous Production Steps, e.g. an <n-1>- and <n-2>-th Production Steps PSₙ₋₁, PSₙ₋₂ according to FIGURE 1, that no further "triangle" parts shall be produced for the moment. Like that those two Production Steps immediately could focus on production of "rectangle" and "circle" parts. Obviously, the Managing/Operating-Program Module respectively the "APP capsule app" of the two Production Steps PSₙ₋₁, PSₙ₋₂ would host the matching of the Coordinating Program Modules respectively the coordination apps for interacting with the Production Step PSₙ and also obviously, the concrete application logic for coding the Coordinating Program Modules respectively the coordination apps can be adapted to fit the needs of a particular domain or project.

The Managing/Operating-Program Module respectively the "APP capsule app"is an app that can host other apps (App-in-app-concept) and which is hosted by the Control Sub-System, including particularly at least one Programmable Logic Controller, an "Industrial PC" or a field device the Managing/Operating-Program Module respectively the "APP capsule app" is running on and being part of an Automation Device of the Production Unit hosting the Control Sub-System, and executable on the Automation Device for managing and operating the execution of a single Production Step.

The Managing/Operating-Program Module respectively the "APP capsule app"provides an abstraction of the execution environment, specifics of the Programmable Logic Controller, an "Industrial PC" or a field device and the Production Unit to the Coordinating Program Module respectively the coordination app that is hosted inside the Managing/Operating-Program Module respectively the "APP capsule app". Therefore, the Coordinating Program Module respectively the coordination app inside the Managing/Operating-Program Module respectively the "APP capsule app"does not need to know the technical details of the data model and data address model of the Automation Device. Like that, the Managing/Operating-Program Module respectively the "APP capsule app"simplifies the mapping of production unit data and automation device data to logical information.

The advantage of this idea is a programming context ("APP capsule app", App-in-app-concept) that allows for sensing the state of an individual production step, retrieving information about the production plan/goals, and interacting with programming contexts of other production steps. Like that, the low-level development tasks for solving sensing tasks, actuating tasks, program execution tasks and communication tasks are solved once while the individual strategy for optimizing the production process is left to the concrete domain/project.

This has several outstanding advantages compared to the traditional way of solving the task of coordination:
1. Buffers for storing parts can be reduced significantly (compared to storing large amounts of raw material or parts in production step buffers).
2. The coordination between production steps is faster and much more repeatable (compared to manual procedures).
3. The coordination between production steps is much more flexible and robust when it comes to rescheduling because of changes in the production goals/schedule or incidents within production steps.
4. In addition, it is more scalable.

Of a sui generis design the subject matter of the invention is preferably on one side either a Method or a Digital Tool and on the other a Automation Device.

The Digital Tool according to the claim 10 includes a Managing/Operating-Program Module, in particular based on an "APP capsule app", running on a Programmable Logic Controller (PLC) or an "Industrial PC" of a Control Sub-System in an Automation Device of a Production Unit for managing and operating job shop type of production within the infrastructure of a plant, whereby the Managing/Operating-Program Module based on an "APP capsule app" is preferably downloadable from a server or cloud or is uploadable via a USB-stick or in addition is stored or uploadable or downloadable into a storage media being inserted or insertable into the Programmable Logic Controller (PLC) or an "Industrial PC" including a processor. The Digital Tool can be sold or distributed separately or in common with the Automation Device or the System for managing and operating job shop type of production within the infrastructure of a plant.

Other expedient improvements of the invention are stated in the dependent claims.

So according to the claims 4 and 13 the Managing/Operating-Program Module respectively the "APP capsule app"is itself remote loadable if the Host Automation Device allows for remote loading of software and gives access to information required therefore, in particular Interaction-Interfaces and Dependencies.

If according to the claims 5 and 14 the Host Automation Device does not allow for remote loading of software, app capsule functionality could be coded statically into the host automation device.

So further according to the claims 6 and 15 as long as the Host Automation Device allows Managing/Operating-Program Module respectively the "APP capsule app" on different devices to communicate (enabling a communication functionality), the Managing/Operating-Program Module respectively the "APP capsule app" allow guest apps to communicate among each other either directly in a format defined by the guest apps or indirectly by logical events defined by the Managing/Operating-Program Module respectively the "APP capsule app". These events can provide indirection in terms of the name and address of other guest apps and in terms of logical production goals, actions, states and resources.

The communication functionality is preferably a dedicated Interaction-Interface for deploying the at least one Coordinating Program Module, on the Managing/Operating-Program Module enabling the at least one Coordinating Program Module to communicate with other Coordinating Program Modules hosted by other Managing/Operating-Program Modules of other single Production Units executing preceding or subsequent Production Steps to the single Production Step.

So moreover according to the claims 7 and 16 information of the plant infrastructure, in particular at least one of layout information, buffer states information, information concerning logical dependencies between production units, levels of production steps and production steps, is provided via the communication functionality, in particular the first Interaction-Interface for deploying the at least one Coordinating Program Module on the Managing/Operating-Program Module respectively the "APP capsule app" to the guest apps respectively to the at least one Coordinating Program Module.

In this context the information of the plant infrastructure is either available through centralized interfaces or is computed by the set of the Managing/Operating-Program Modules respectively the "APP capsule apps" in the plant themselves. However, the calculation of plant information is outside the scope of the present invention and hence not discussed in detail.

So according to the claims 8 and 17 the Managing/Operating-Program Module respectively the "APP capsule app" allow guest apps (enabling the at least one Coordinating Program Module via the communication functionality) to perform at least one of production process optimization in industrial plants or interconnected medical systems and operation optimization in plants that are similar to industrial plants or interconnected medical systems.

So finally according to the claims 9 and 18 if the optimization logic of guest apps cannot be hard coded, then an interface for configuring production goals can be added to the Managing/Operating-Program Module respectively the "APP capsule apps". This means that a dedicated Interaction-Interface for configuring production goals is used, if the production goals cannot be hard coded in the at least one Coordinating Program Module.

Moreover advantageous further developments of the invention arise out of the following description of a preferred embodiment of the invention according to the FIGURES 1 to 3. They show:
FIGURE 1 based on a rough sketch a job shop type scenario of production within the infrastructure of a plant,
FIGURE 2 a principle sketch of a Control Sub-System hosting a Managing/Operating-Program Module based on an "APP capsule app" and designed as a Digital Tool,
FIGURE 3 a sequence chart with an exemplary message flow between "APP capsule apps"for managing and operating the job shop type of production within the infrastructure of the plant according to the FIGURE 1.

FIGURE 1 shows based on a rough sketch a job shop type scenario of production within the infrastructure of a plant PLT. The depicted job shop type of production encompasses numerous Production Units PU executing a plurality of Production Steps PS on Production Levels PL. In general the job shop type of production within the infrastructure of the plant PLT could comprise a number "i" of Production Levels PL₁...PLᵢ, whereby in the FIGURE 1 only four consecutive Production Levels PL are shown with a discriminative detail level. Nevertheless the at least one Production Unit PU is executing on the Production Level PL at least one Production Step PS of in general a number "j" of production Steps PS₁...PSⱼ belonging to the job shop type of production in the plant PLT.

On the four consecutive Production Levels are executed each at least one Production Step. Of these four Production Levels being looked at more closely regarding the details of Production Step execution there are two consecutive Production Levels PL on which the corresponding Production Step execution occurs in the sense of a cross-level processing chain where the results of two Production Steps executed by a first Production Unit PU_{X} and a second Production Unit PU_{Y} of the numerous Production Units PU on an initial Production Level are input parameters of a Production Step executed by a third Production Unit PU_{Z} of the numerous Production Units PU on a final Production Level.

At this point it should be mentioned that is also possible to have more than the two Production Steps and the two Production Units PU_{X}, PU_{Y} of the numerous Production Units PU on the initial Production Level and to have more than the one Production Step and the Production Units PU_{Z} of the numerous Production Units PU on the final Production Level. Further it should be mentioned that the job shop type of production is not completely laid out to have the cross-level processing chain. It is rather possible to have a mixture of cross-level processing and single level processing.

According to the depicted job shop type scenario of production, the final Production Level is a <m>-th Production Level PLₘ of the number "i" of Production levels PL₁...PLᵢ with 1 ≤m≤i, whereas the initial Production Level (preceding to the final Production Level respectively the <m>-th Production Level PLₘ) is a <m-1>-th Production Level PLₘ₋₁ of the number "i" of Production Levels PL₁...PLᵢ with 1≤m≤i.

On the <m>-th Production Level PLₘ is executed a <n>-th Production Step PSₙ of the number "j" of Production Steps PS₁...PSⱼ with 1≤n≤j. On the <m-1>-th Production Level PLₘ₋₁ are executed the two Production Steps, a <n-1>-th Production Step PSₙ₋₁ and a <n-2>-th Production Step PSₙ₋₂, of the number "j" of Production Steps PS₁...PSⱼ with 1≤n≤j. While the <n-2>-th Production Step PSₙ₋₂ is executed by the first Production Unit PU_{X} and the <n-1>-th Production Step PSₙ₋₁ is executed by the second Production Unit PU_{Y}, the <n>-th Production Step PSₙ is executed by the third Production Unit PU_{Z}.

With regard of the two remaining Production Levels of the four consecutive Production Levels and following the aforementioned nomenclature there are, according to the FIGURE 1, (i) a <m-2>-th Production Level PLₘ₋₂, which proceed the <m-1>-th Production Level PLₘ₋₁ and on which three Production Steps PS, a <n-3>-th Production Step PSₙ₋₃, a <n-4>-th Production Step PSₙ₋₄ and a <n-5>-th Production Step PSₙ₋₅ are executed, and (ii) a <m+1>-th Production Level PLₙ₊₁, which follows the <m>-th Production Level PLₘ and on which again three Production Steps, a <n+1>-th Production Step PSₙ₊₁, a <n+2>-th Production Step PSₙ₊₂ and a <n+3>-th Production Step PSₙ₊₃, are executed.

The Production Steps PSₙ₋₅, PSₙ₋₄, PSₙ₋₃, PSₙ₊₁, PSₙ₊₂, PSₙ₊₃ are executed each by the Production Unit PU.

In the following it is described how the Production Units PU_{X}, PU_{Y}, PU_{Z} are equipped in view of the preferred embodiment of the invention. This equipment is included essentially in each Production Unit PU. While the first and second Production Units PU_{X}, PU_{Y} include each a Resource Buffer RB, an Automation Device AD and an Output Buffer OB, the third Production Unit PU_{Z} includes three Resource Buffers, a first Resource Buffer RB₁, a second Resource Buffer RB₂ and a third Resource Buffer RB₃, as in the first and second Production Units PU_{X}, PU_{Y} the Automation Device AD and two Output Buffers, a first Output Buffer OB₁ and a second Output Buffer OB₂. It should be clear and self-evident that the number of Buffers can differ from the depicted ones.

The Automation Device AD of the single Production Unit PU, PU_{X}, PU_{Y}, PU_{Z} is hosting a Control Sub-System CSS, which includes particularly at least one Programmable Logic Controller PLC or an Industrial PC IPC. Besides that the Control Sub-System CSS hosts a Managing/Operating-Program Module MOPM, which in particular is based on an "APP capsule app". The Managing/Operating-Program Module respectively the "APP capsule app"is itself an app that is loaded or implemented into the Control Sub-System CSS of the Production Unit PU, PU_{X}, PU_{Y}, PU_{Z} executing the Production Step PS, PSₙ₋₁, PSₙ₋₂ and defines a set of interfaces and dependencies for interaction with the Control Sub-System CSS. The Managing/Operating-Program Module MOPM respectively the "APP capsule app", which is running on the Programmable Logic Controller PLC or an "Industrial PC" IPC, is able to host at least one Coordinating Program Module, in particular at least one coordination app. The Coordinating Program Module respectively the coordination app in turn encapsulates the domain-specific or project-specific logic to translate production plans or goals into recommendations for the local activities of the Production Step PS, PSₙ₋₁, PSₙ₋₂ and if applicable for coordination events with preceding and subsequent Production Steps. The Coordinating Program Module respectively the coordination app is provided with a set of functionalities that stem from the dependencies of the Managing/Operating-Program Module MOPM respectively the "APP capsule app".

In the Resource Buffer RB of the first Production Unit PU_{X} on the <m-1>-th Production Level PLₘ₋₁ is stored as Input IP for the <n-2>-th Production Step PSₙ₋₂ a first quantity of Raw Material RM (according to the FIGURE 1 depicted by a cylinder), whereas in the Resource Buffer RB of the second Production Unit PU_{Y} on the <m-1>-th Production Level PLₘ₋₁ is stored as Input IP for the <n-1>-th Production Step PSₙ₋₁ a second quantity of Raw Material RM.

It should be clear and self-evident that the Input IP can differ from the depicted one in quantity and kind (e.g. form, type etc.). Saying this it also possible in both cases (although not shown in the FIGURE 1) that Single Production Parts or Assembled Production Parts are stored instead of the Raw Material RM. What is meant by "Single Production Parts" or "Assembled Production Parts" will be described later on by describing the FIGURE 1.

In the Output Buffer OB of the first Production Unit PU_{X} on the <m-1>-th Production Level PLₘ₋₁ are stored as an Output OP of the <n-2>-th Production Step PSₙ₋₂ multiple Single Production Parts SPP, one first Single Production Part SPP1 (according to the FIGURE 1 depicted by a rectangle), one second Single Production Part SPP2 (according to the FIGURE 1 depicted by a triangle) and two third Single Production Parts SPP3 (according to the FIGURE 1 depicted by a circle), whereas in the Output Buffer OB of the second Production Unit PU_{Y} on the <m-1>-th Production Level PLₘ₋₁ are stored as an Output OP of the <n-1>-th Production Step PSₙ₋₁ again multiple Single Production Parts SPP, but in this case only four second Single Production Parts SPP2. A Single Production Part in this context is the result when normally one dedicated Raw Material is undergone a dedicated Production Step, e.g. from one cylinder is made each a rectangle, triangle and circle respectively the Single Production Part SPP1, SPP2, Spp3.

It should be clear and self-evident that the Output OP can differ from the depicted one in quantity and kind (e.g. form, type etc.). Saying this it is therefore possible in both cases (although not shown in the FIGURE 1) in particular with regard to the different possible Inputs - Single Production Parts or Assembled Production Parts - to store as the corresponding Output Assembled Production Parts or Extended Assembled Production Parts instead of the Single Production Parts SPP. What is meant by "Assembled Production Parts" or "Extended Assembled Production Parts" will be described later on by describing the FIGURE 1.

At this point an aspect of the first and second Production Units PU_{X}, PU_{Y} should be mentioned, in which the Managing/Operating-Program Module MOPM each being based on the "APP capsule app", hosted by the Control Sub-System CSS and running on the Programmable Logic Controller PLC or the "Industrial PC" IPC is executable each on the Automation Device AD for managing and operating the execution of the single Production Step PSₙ₋₂, PSₙ₋₁ on the single Production Unit PU_{X}, PU_{Y} in a Production Process Network PPN between the Resource Buffer RB and the Output Buffer OB.

According to the FIGURE 1 the two Production Units PU_{X}, PU_{Y} are used in a cross-level processing with the third Production Unit PU_{Z}, which will be described later on by describing the FIGURE 1.

But it would be also possible that the Production Unit PU_{X}, PU_{Y} with the cited equipment and with the same or a different Input/Output-Scenario as given in the FIGURE 1 could executed a different Production Step, e.g. the <n-5>-th Production Step PSₙ₋₅ on the <m-2>-th Production Level PLₘ₋₂ without a cross-level processing with a Production Unit as shown in the FIGURE 1. The same would be valid (although it is not shown in the FIGURE 1) for the Production Step PSₙ₋₂, PSₙ₋₁ on the <m-1>-th Production Level PLₘ₋₁ without the cross-level processing with the third Production Unit PU_{Z}. In both cases we are talking about a single level processing.

In such a case (without the cross-level processing with the third Production Unit PU_{Z}) the Production Process Network PPN is defined for intra-level acting of the first dedicated single production unit PU_{X} or a second dedicated single Production Unit PU_{Y} on the <m-1>-th Production Level PLₘ₋₁ of the Production Levels PL₁...PLᵢ with 1≤m≤i in the <n-2>-th single Production Step PSₙ₋₂ respectively the <n-1>-th single Production Step PSₙ₋₁ of the production steps PS₁...PSⱼ with 1≤n≤j between the Resource Buffer RB and the Output Buffer OB as an intra-level Output OP_{ITR-L}.

Now back to the description how the Production Units PU_{X}, PU_{Y}, PU_{Z} are equipped in view of the preferred embodiment of the invention.

In the Resource Buffers RB₁, RB₂, RB₃ of the third Production Unit PU_{Z} on the <m>-th Production Level PLₘ is stored as Inputs IP for the <n>-th Production Step PSₙ, e.g. Single Production Parts SPP. So, in the first Resource Buffer RB₁ is stored a first quantity of the first Single Production Part SPP1, in the second Resource Buffer RB₂ is stored a second quantity of the second Single Production Part SPP2 and in the third Resource Buffer RB₃ is stored a third quantity of the third Single Production Part SPP3.

It should be clear and self-evident that firstly the number of quantities could be equal or different and secondly in each of the cited Resource Buffers RB₁, RB₂, RB₃ could be stored at least one of the cited Single Production Parts SPP1, SPP2, SPP3.

In general it can be said that the Inputs IP can differ each from the depicted one in quantity and kind (e.g. form, type etc.). Saying this it also possible (although not shown in the FIGURE 1) that Assembled Production Parts are stored instead of the Single Production Parts SPP.

In the Output Buffers OB₁, OB₂ of the third Production Unit PU_{Z} on the <m>-th Production Level PLₘ is stored as Outputs OP of the <n>-th Production Step PSₙ, e.g. Assembled Production Parts APP. So, in the first Output Buffer OB₁ are stored a first quantity of a first Assembled Production Part APP1 (according to the FIGURE 1 a package of "Rectangle-Triangle-Circle") and a second quantity of a second Assembled Production Part APP2 (according to the FIGURE 1 a package of "Rectangle-Rectangle-Circle") and in the second Output Buffer OB₂ is stored a third quantity of the second Assembled Production Part APP2. An Assembled Production Part in this context is the result when at least one dedicated Single Production Part is undergone a dedicated Production Step, e.g. from three Single Production Parts - for instance Rectangle, Triangle, Circle - the Assembled Production Part APP1 respectively the package "Rectangle-Triangle-Circle" is made.

It should be clear and self-evident that firstly the number of quantities could be equal or different and secondly in each of the cited Output Buffers OB₁, OB₂ could be stored at least one of the cited Assembled Production Parts APP1, APP2.

In general it can be said that the Outputs OP can differ each from the depicted one in quantity and kind (e.g. form, type etc.). Saying this it also possible (although not shown explicitly in the FIGURE 1) that Extended Assembled Production Parts are stored instead of the Assembled Production Parts APP. An Extended Assembled Production Part in this context is the result when at least two dedicated Assembled Production Part are undergone a dedicated Production Step.

At this point an aspect of the third Production Units PU_{Z} should be mentioned, in which the Managing/Operating-Program Module MOPM each being based on the "APP capsule app", hosted by the Control Sub-System CSS and running on the Programmable Logic Controller PLC or the "Industrial PC" IPC is executable each on the Automation Device AD for managing and operating the execution of the single Production Step PSₙ on the single Production Unit PU_{Z} in a Production Process Network PPN between
(i) the Resource Buffer RB₁, RB₂, RB₃ and the Output Buffer OB₁, OB₂ or
(ii) the Resource Buffer RB of the first and second Production Units PU_{X}, PU_{Y} and the Output Buffer OB₁, OB₂.

According to the FIGURE 1 the third Production Unit PU_{Z}, is used in a cross-level processing with the two Production Units PU_{X}, PU_{Y} and hence option **(ii)** above is correctly.

In such a case (cross-level processing) the Production Process Network PPN is defined for inter-level acting of the third dedicated single Production Unit PU_{Z} on the m-th Production Level PLₘ of the Production Levels PL₁...PLᵢ with 1≤m≤i in the n-th single Production Step PSₙ of the Production Steps PS₁...PSⱼ with 1≤n≤j between the at least one Resource Buffer RB of the at least one Production Step PSₙ₋₁, PSₙ₋₂ of the Production Steps PS₁...PSⱼ with 1≤n≤j preceding to the n-th single Production Step PSₙ on the <m-1>-th Production Level PLₘ₋₁ of the Production Levels PL₁...PLᵢ with 1≤m≤i preceding to the m-th Production Level PLₘ and the at least one Output Buffer OB1, OB2 of the m-th Production Level PLₘ as an inter-level Output OP_{IT-L}.

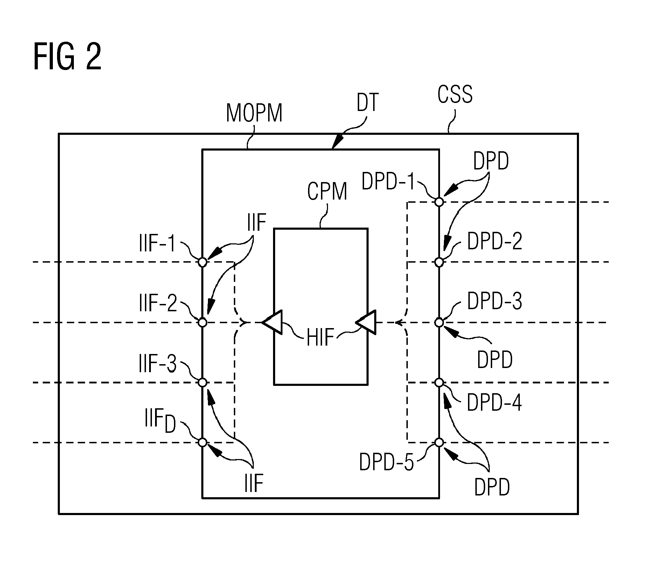

FIGURE 2 shows a principle sketch of the Control Sub-System CSS in the Automation Device AD of the Production Unit PU, PU_{X}, PU_{Y}, PU_{Z} hosting the Managing/Operating-Program Module MOPM based on an "APP capsule app" and designed as a Digital Tool DT. In the Managing/Operating-Program Module MOPM based on an "APP capsule app" there are assigned a set of Interaction-Interfaces IIF, IIF_{D}, whereby the Interaction-Interfaces IIF according to the preferred embodiment are a first Interaction-Interface IIF-1, a second Interaction-Interface IIF-2 and a third Interaction-Interface IIF-3, and Dependencies DPD, so according to the preferred embodiment a first Dependency DPD-1, a second Dependency DPD-2, a third Dependency DPD-3, a fourth Dependency DPD-4 and a fifth Dependency DPD-5, for interaction with at least the Control Sub-System CSS and/or at least another Managing/Operating-Program Module of other single Production Units PU, PU_{X}, PU_{Y}, PU_{Z} executing preceding or subsequent Production Steps to the single Production Step PS, PSₙ₋₂, PSₙ₋₁, PSₙ. Moreover the Managing/Operating-Program Module MOPM is hosting via Host-Interfaces HIF at least one Coordinating Program Module CPM, which
**(a)** encapsulates a domain-specific or project-specific logic to translate production plans or goals into recommendations for local activities of the single Production Step PS, PSₙ₋₂, PSₙ₋₁, PSₙ and for coordination events with the at least one preceding Production Step to the single Production Step PS, PSₙ₋₂, PSₙ₋₁, PSₙ and at least one subsequent Production Step to the single Production Step PS, PSₙ₋₂, PSₙ₋₁, PSₙ,
(b) provides a set of functionalities stemming from the Dependencies DPD, in particular from the first Dependency DPD-1 querying production goals, the second Dependency DPD-2 querying process images, the third Dependency DPD-3 querying buffer information, the fourth Dependency DPD-4 querying production wishes and the fifth Dependency DPD-5 querying production possibilities, and
(c) implements the set of Interaction-Interfaces IIF, in particular concerning the first Interaction-Interface IIF-1 for deploying the at least one Coordinating Program Module CPM, the second Interaction-Interface IIF-2 for querying production possibilities and the third Interaction-Interface IIF-3 for querying next items to be produced on the single Production Unit PU, PU_{X}, PU_{Y}, PU_{Z}.

In this "APP capsule app"-environment the Managing/Operating-Program Module MOPM retrieves information available through the defined Dependencies DPD, DPD-1...DPD-5, provides this information to the Coordination Program Module CPM via the Host-Interfaces HIF and outputs computation results of the Coordination Program Module CPM through the Interaction-Interfaces IIF, IIF-1...IIF-3.

The Managing/Operating-Program Module MOPM can be remote loaded regarding its Module-functionality, if the Automation Device AD hosting the Control Sub-System CSS allows remote loading of program modules, and gives access to information required therefore. This access occurs in particular to the Interaction-Interfaces IIF, IIF-1...IIF-3 and the Dependencies DPD, DPD-1...DPD-5.

However, if the Automation Device AD hosting the Control Sub-System CSS does not allow remote loading of program modules, the Module-functionality is coded statically into the Automation Device AD.

Moreover the Managing/Operating-Program Module MOPM includes a communication functionality, which is preferably the first Interaction-Interface IIF-1 for deploying the at least one Coordinating Program Module CPM, for enabling the at least one Coordinating Program Module CPM to communicate with other Coordinating Program Modules hosted by other Managing/Operating-Program Modules of other single Production Units PU, PU_{X}, PU_{Y}, PU_{Z} executing preceding or subsequent Production Steps to the single Production Step PS, PSₙ₋₂, PSₙ₋₁, PSₙ either directly in a format defined by the at least one Coordinating Program Module CPM or indirectly by logical events defined by the Managing/Operating-Program Module MOPM as long as the Automation Device AD allows the Managing/Operating-Program Module MOPM to communicate with other Managing/Operating-Modules on other Automation Devices.

This communication functionality respectively the first Interaction-Interface IIF-1 for deploying the Coordinating Program Module CPM, is designed such that information of the plant PLT, in particular at least one of layout information, buffer states information, information concerning logical dependencies between production units, levels of production steps and production steps, is provided to via the communication functionality to the at least one Coordinating Program Module CPM.

Furthermore the communication functionality is designed such that the Coordinating Program Module CPM is enabled via the communication functionality to perform at least one of production process optimization in industrial plants or interconnected medical systems and operation optimization in plants that are similar to industrial plants or interconnected medical systems.

Besides the aforementioned Interaction-Interfaces IIF, IIF-1...IIF-3 the Managing/Operating-Program Module MOPM includes a further Interface of the set of Interaction-Interfaces IIF, namely a dedicated Interaction-Interface IIF_{D} for configuring production goals, if the production goals cannot be hard coded in the at least one Coordinating Program Module CPM.

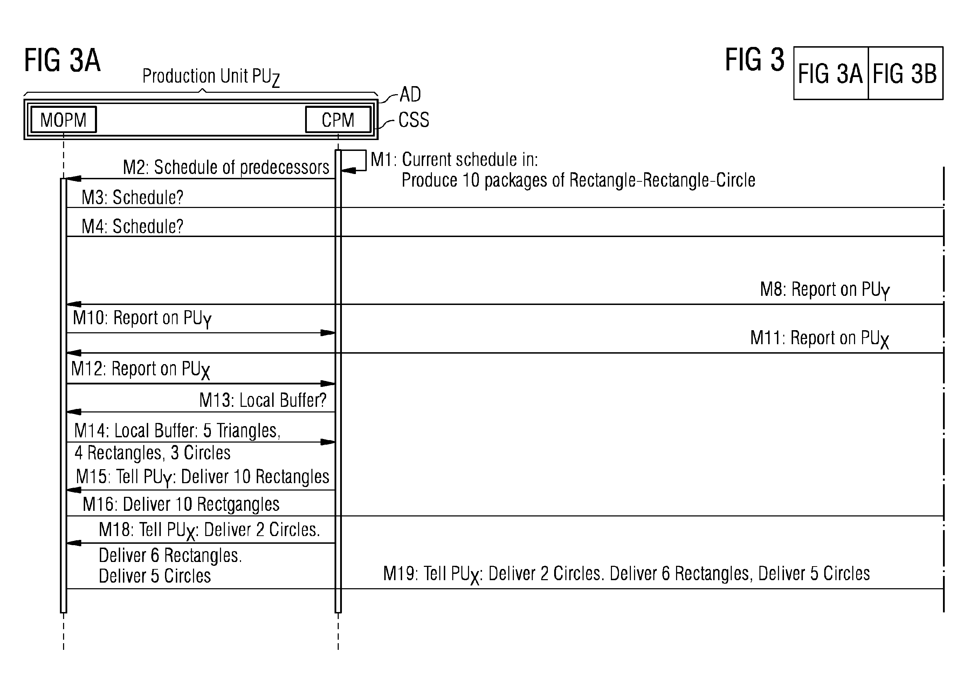

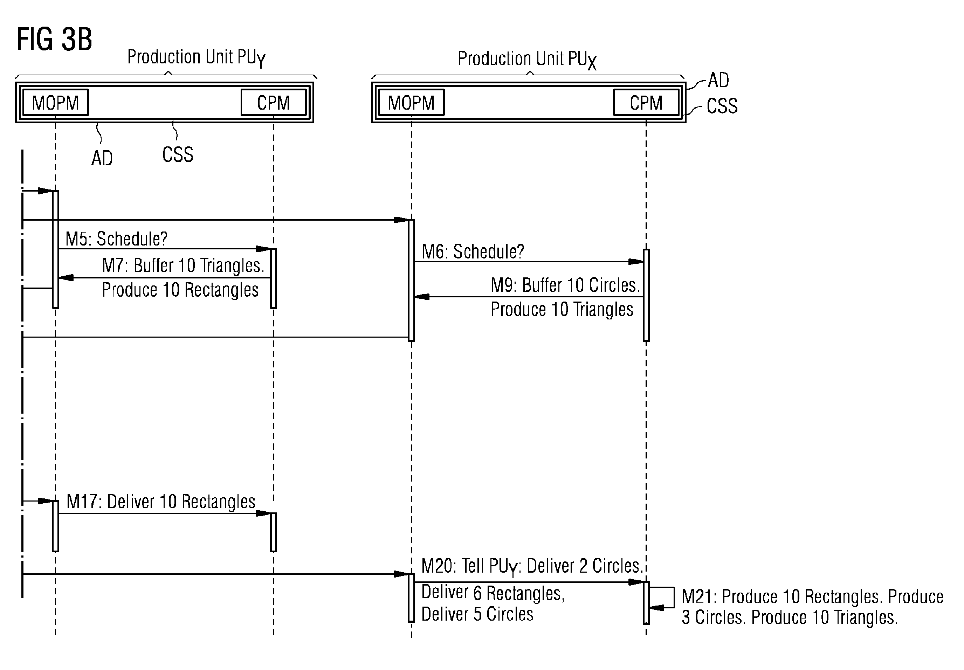

FIGURE 3 depicts a sequence chart with an exemplary message flow between "APP capsule apps"for managing and operating the job shop type of production within the infrastructure of the plant PLT according to the FIGURE 1. The depicted exemplary message flow happens between the Managing/Operating-Program Modules MOPM with each the hosted Coordinating Program Module CPM, which is based each on an "APP capsule app" and hosted each by the Control Sub-System CSS in the Automation Devices AD of the Production Unit PU, PU_{X}, PU_{Y}, PU_{Z}.

The depicted flow encompasses twenty-one messages M1...M21 and has the initial point that at the third Production Unit PU_{Z} a current schedule is to produce 10 packages of "Rectangle-Rectangle-Circle", which means according to the FIGURE 1 that at the Production Unit PU_{Z} 10 packages of the second Assembled Production Part APP2 shall be produced. Hence a corresponding first Message M1 <Produce 10 packages of "Rectangle-Rectangle-Circle"> reaches the Coordinating Program Module CPM of the third Production Unit PU_{Z}.

Then a second Message <Schedule predecessors> M2 at the third Production Unit PU_{Z} is going from the Coordinating Program Module CPM to the Managing/Operating-Program Module MOPM. The Managing/Operating-Program Module MOPM of the third Production Unit PU_{Z} sends thereupon a third Message <Schedule?> M3 to the Managing/Operating-Program Module MOPM of the second Production Unit PU_{Y} and a fourth Message <Schedule?> M4 to the Managing/Operating-Program Module MOPM of the first Production Unit PU_{X}. Both, the Managing/Operating-Program Module MOPM of the first Production Unit PU_{X} and the Managing/Operating-Program Module MOPM of the second Production Unit PU_{Y}, give this information to the corresponding Coordinating Program Module CPM in the Production Unit. In the case of the second Production Unit PU_{Y} this done by a fifth Message <Schedule?> M5 and in the case of the second Production Unit PU_{Y} this done by a sixth Message <Schedule?> M6.

In response to each of these Messages M5, M6 the corresponding Coordinating Program Module CPM answers. So the Coordinating Program Module CPM of the second Production Unit PU_{Y} answers by a seventh Message <Buffer: 10 Triangles (according to the FIGURE 1 the second Single Production Part SPP2); Produce: 10 Rectangles (according to the FIGURE 1 the first Single Production Part SPP1)> M7. Thereupon an eighth Message <Report on the second Production Unit PU_{Y}> M8 is transmitted from the Managing/Operating-Program Module MOPM of the second Production Unit PU_{Y} to the Managing/Operating-Program Module MOPM of the third Production Unit PU_{Z} in response to the requested schedule.

In the meantime the Coordinating Program Module CPM of the first Production Unit PU_{X} also answers correspondingly the sixth Message M6 by a ninth Message <Buffer: 10 Circles (according to the FIGURE 1 the third Single Production Part SPP3); Produce: 10 Triangles> M9. In the meantime also the Managing/Operating-Program Module MOPM of the third Production Unit PU_{Z} receiving the <Report on the second Production Unit PU_{Y}> by the eighth Message M8 forwards this information to the Coordinating Program Module CPM of the third Production Unit PU_{Z} by a tenth Message <Report on the second Production Unit PU_{Y}> M10.

Now an eleventh Message <Report on the first Production Unit PU_{X}> M11 is sent from the Managing/Operating-Program Module MOPM of the first Production Unit PU_{X} to the Managing/Operating-Program Module MOPM of the third Production Unit PU_{Z} in response to the requested schedule. The Managing/Operating-Program Module MOPM receiving this <Report on the second Production Unit PU_{Y}> forwards this information to the Coordinating Program Module CPM of the third Production Unit PU_{Z} by a twelfth Message <Report on the second Production Unit PU_{Y}> M12.

The Coordinating Program Module CPM of the third Production Unit PU_{Z} receiving the twelfth Message M12 asks thereupon the Managing/Operating-Program Module MOPM of the third Production Unit PU_{Z} by a thirteenth Message <Local Buffer?> M13 for the content of the at least one Resource Buffer RB₁, RB₂, RB₃. In response to this Message M13 the Managing/Operating-Program Module MOPM delivers by a fourteenth Message <Local Buffer: 5 Triangles; 4 Rectangles; 3 Circles> M14 the corresponding content information.

According to this information received by the Message M14 the Coordinating Program Module CPM of the third Production Unit PU_{Z} orders by a fifteenth Message <Tell the second Production Unit PU_{Y}: Deliver 10 Rectangles> M15 via the Managing/Operating-Program Module MOPM of the third Production Unit PU_{Z} 10 Rectangles from the second Production Unit PU_{Y}, whereupon the Managing/Operating-Program Module MOPM send a sixteenth Message <Deliver 10 Rectangles> M16 to the Managing/Operating-Program Module MOPM of the second Production Unit PU_{Y}, which forwards this information by a seventeenth Message <Deliver 10 Rectangles> M17 to the corresponding Coordinating Program Module CPM.

After that and in addition the Coordinating Program Module CPM of the third Production Unit PU_{Z} orders by a eighteenth Message <Tell the first Production Unit PU_{X}: Deliver 2 Circles; Deliver 6 Rectangles; Deliver 5 Circles> M18 via the Managing/Operating-Program Module MOPM of the third Production Unit PU_{Z} 6 Rectangles and 7 Circles from the first Production Unit PU_{X}, whereupon the Managing/Operating-Program Module MOPM send a nineteenth Message <Deliver 2 Circles; Deliver 6 Rectangles; Deliver 5 Circles> M19 to the Managing/Operating-Program Module MOPM of the first Production Unit PU_{X}, which forwards this information by a twentieth Message <Deliver 2 Circles; Deliver 6 Rectangles; Deliver 5 Circles> M20 to the corresponding Coordinating Program Module CPM. Finally, in the Coordinating Program Module CPM of the first Production Unit PU_{X} a current status request is carried out internally by a twenty-first Message <Produce 10 Rectangles; Produce 3 Circles; Produce 10 Triangles> M21.

## Claims

1. Method for managing and operating job shop type of production within the infrastructure of a plant (PLT), in particular industrial plants or interconnected medical systems, which includes at least one Production Unit (PU, PU_{X}, PU_{Y}, PU_{Z}) acting on a Production Level (PL, PLₘ, PLₘ₋₁) of a number "i" of Production Levels (PL₁...PLᵢ) such that the Production Unit (PU, PU_{X}, PU_{Y}, PU_{Z}) is executing on the Production Level (PL, PLₘ, PLₘ₋₁) at least one Production Step (PS, PSₙ₋₂, PSₙ₋₁, PSₙ) of a number "j" of Production Steps (PS₁...PSⱼ), **characterized by** the following steps:
(**a**) Using a Managing/Operating-Program Module (MOPM), in particular based on an "APP capsule app", which is hosted by a Control Sub-System (CSS), including particularly at least one Programmable Logic Controller (PLC) or an "Industrial PC" (IPC) the Managing/Operating-Program Module (MOPM) is running on and being part of an Automation Device (AD) of a single Production Unit (PU, PU_{X}, PU_{Y}, PU_{Z}) hosting the Control Sub-System (CSS), and executable on the Automation Device (AD) for managing and operating the execution of a single Production Step (PS, PSₙ₋₂, PSₙ₋₁, PSₙ) on the single Production Unit (PU, PU_{X}, PU_{Y}, PU_{Z}) in a Production Process Network (PPN) between
**(a1)** at least one Resource Buffer (RB, RB₁, RB₂, RB₃) of the Production Unit (PU, PU_{X}, PU_{Y}, PU_{Z}) for storing each an Input (IP), in particular Raw Material (RM), Single Production Parts or Assembled Production Parts, for the Production Step (PS, PSₙ₋₂, PSₙ₋₁, PSₙ) on the Production Level (PL, PLₘ, PLₘ₋₁) or for storing each at least one Output (OP), in particular Single Production Parts (SPP, SPP1, SPP2, SPP3) or Assembled Production Parts (APP, APP1, APP2), of at least one Production Step preceding to the Production Step (PS, PSₙ₋₂, PSₙ₋₁, PSₙ) and
**(a2)** at least one Output Buffer (OB, OB1, OB2) of the Production Unit (PU, PU_{X}, PU_{Y}, PU_{Z}) for storing an Output (OP), in particular Single Production Parts (SPP, SPP1, SPP2, SPP3) or Assembled Production Parts (APP, APP1, APP2), of the Production Step (PS, PSₙ₋₂, PSₙ₋₁, PSₙ) on the Production Level (PL, PLₘ, PLₘ₋₁),
**(b)** Loading or implementing the Managing/Operating-Program Module (MOPM) into the Control Sub-System (CSS),
**(c)** Defining in the Managing/Operating-Program Module (MOPM) a set of Interaction-Interfaces (IIF, IIF_{D}) and Dependencies (DPD) for interaction with at least the Control Sub-System (CSS) and/or at least another Managing/Operating-Program Module of other single Production Units (PU, PU_{X}, PU_{Y}, PU_{Z}) executing preceding or subsequent Production Steps to the single Production Step (PS, PSₙ₋₂, PSₙ₋₁, PSₙ),
**(d)** Hosting by the Managing/Operating-Program Module (MOPM) via Host-Interfaces (HIF) at least one Coordinating Program Module (CPM)
**(d1)** encapsulating a domain-specific or project-specific logic to translate production plans or goals into recommendations for local activities of the single Production Step (PS, PSₙ₋₂, PSₙ₋₁, PSₙ) and for coordination events with the at least one preceding Production Step to the single Production Step (PS, PSₙ₋₂, PSₙ₋₁, PSₙ) and at least one subsequent Production Step to the single Production Step (PS, PSₙ₋₂, PSₙ₋₁, PSₙ),
**(d2)** providing a set of functionalities stemming from the Dependencies (DPD), in particular from a first Dependency (DPD-1) querying production goals, a second Dependency (DPD-2) querying process images, a third Dependency (DPD-3) querying buffer information, a fourth Dependency (DPD-4) querying production wishes and a fifth Dependency (DPD-5) querying production possibilities, and
**(d3)** implementing the set of Interaction-Interfaces (IIF), in particular concerning the set a first Interaction-Interface (IIF-1) for deploying the at least one Coordinating Program Module (CPM), a second Interaction-Interface (IIF-2) for querying production possibilities, a third Interaction-Interface (IIF-3) for querying next items to be produced on the single Production Unit (PU, PU_{X}, PU_{Y}, PU_{Z}),
**(e)** Designing the Managing/Operating-Program Module (MOPM) such that it
**(e1)** retrieves information available through the defined Dependencies (DPD, DPD-1...DPD-5),
**(e2)** provides the retrieved information to the Coordination Program Module (CPM) and
**(e3)** outputs computation results of the Coordination Program Module (CPM) through the set of Interaction-Interfaces (IIF, IIF-1...IIF-3).

2. Method according to claim 1, **characterized in that** the Production Process Network (PPN) is defined for inter-level acting of a dedicated single Production Unit (PU_{Z}) on a m-th Production Level (PLₘ) of the Production Levels (PL₁...PLᵢ) with 1≤m≤i in a n-th single Production Step (PSₙ) of the Production Steps (PS₁...PSⱼ) with 1≤n≤j between at least one dedicated Resource Buffer (RB) for storing each at least one Input (IP), in particular Raw Material (RM) or Single Production Parts Single Production Parts, of at least one Production Step (PSₙ₋₁, PSₙ₋₂,...) of the Production Steps (PS₁...PSⱼ) with 1≤n≤j preceding to the n-th single Production Step (PSₙ) on a <m-1>-th Production Level (PLₘ₋₁) of the Production Levels (PL₁...PLᵢ) with 1≤m≤i preceding to the m-th Production Level (PLₘ) and at least one dedicated Output Buffer (OB1, OB2) for storing an Output (OP), in particular Assembled Production Parts (APP, APP1, APP2) or Extended Assembled Production Parts, of the m-th Production Level (PLₘ) as an inter-level Output (OP_{IT-L}).

3. Method according to claim 1, **characterized in that** the Production Process Network (PPN) is defined for intra-level acting of a first dedicated single production unit (PU_{X}) or a second dedicated single Production Unit (PU_{Y}) on a <m-1>-th Production Level (PLₘ₋₁) of the Production Levels (PL₁...PLᵢ) with 1≤m≤i in a <n-2>-th single Production Step (PSₙ₋₂) respectively a <n-1>-th single Production Step (PSₙ₋₁) of the production steps (PS₁...PSⱼ) with 1≤n≤j between each at least one dedicated Resource Buffer (RB) for storing each an Input (IP), in particular Raw Material (RM), Single Production Parts or Assembled Production Parts, and each at least one dedicated Output Buffer (OB) for storing each an Output (OP), in particular Single Production Parts (SPP, SPP1, SPP2, SPP3), Assembled Production Parts or Extended Assembled Production Parts, as an intra-level Output (OP_{ITR-L}).

4. Method according to one of the claims 1 to 3, **characterized by**
remote loading the Managing/Operating-Program Module (MOPM) regarding its Module-functionality, if the Automation Device (AD) hosting the Control Sub-System (CSS) allows remote loading of program modules, and gives access to information required therefore, in particular to the Interaction-Interfaces (IIF, IIF_{D}) and the Dependencies (DPD).

5. Method according to claim 4, **characterized in that**
the Module-functionality is coded statically into the Automation Device (AD), if the Automation Device (AD) hosting the Control Sub-System (CSS) does not allow remote loading of program modules.

6. Method according to one of the claims 1 to 5, **characterized by**
enabling a communication functionality, in particular a first Interaction-Interface (IIF-1) for deploying the at least one Coordinating Program Module (CPM), on the Managing/Operating-Program Module (MOPM) for the at least one Coordinating Program Module (CPM) to communicate with other Coordinating Program Modules hosted by other Managing/Operating-Program Modules of other single Production Units (PU, PU_{X}, PU_{Y}, PU_{Z}) executing preceding or subsequent Production Steps to the single Production Step (PS, PSₙ₋₂, PSₙ₋₁, PSₙ) either directly in a format defined by the at least one Coordinating Program Module (CPM) or indirectly by logical events defined by the Managing/Operating-Program Module (MOPM) as long as the Automation Device (AD) allows the Managing/Operating-Program Module (MOPM) to communicate with other Managing/Operating-Modules on other Automation Devices.

7. Method according to claim 6, **characterized by**
providing information of the plant (PLT), in particular at least one of layout information, buffer states information, information concerning logical dependencies between production units, levels of production steps and production steps, to the at least one Coordinating Program Module (CPM) via the communication functionality, in particular the first Interaction-Interface (IIF-1) for deploying the at least one Coordinating Program Module (CPM).

8. Method according to claim 6 or 7, **characterized by**
enabling the at least one Coordinating Program Module (CPM) via the communication functionality to perform at least one of production process optimization in industrial plants or interconnected medical systems and operation optimization in plants that are similar to industrial plants or interconnected medical systems.

9. Method according one of the claims 1 to 8, **characterized by**
using a dedicated Interaction-Interface (IIF_{D}) of the set of Interaction-Interfaces (IIF) for configuring production goals, if the production goals cannot be hard coded in the at least one Coordinating Program Module (CPM).

10. Digital Tool (DT) for managing and operating job shop type of production within the infrastructure of a plant (PLT), in particular industrial plants or interconnected medical systems, which includes at least one Production Unit (PU, PU_{X}, PU_{Y}, PU_{Z}) acting on a Production Level (PL, PLₘ, PLₘ₋₁) of a number "i" of Production Levels (PL₁...PLᵢ) such that the Production Unit (PU, PU_{X}, PU_{Y}, PU_{Z}) is executing on the Production Level (PL, PLₘ, PLₘ₋₁) at least one Production Step (PS, PSₙ₋₂, PSₙ₋₁, PSₙ) of a number "j" of Production Steps (PS₁...PSⱼ), **characterized by**:
A Managing/Operating-Program Module (MOPM), which is hosted by a Control Sub-System (CSS), including particularly at least one Programmable Logic Controller (PLC) or an "Industrial PC" (IPC) the Managing/Operating-Program Module (MOPM) is running on and being deployable on an Automation Device (AD) of a single Production Unit (PU, PU_{X}, PU_{Y}, PU_{Z}) hosting the Control Sub-System (CSS), executable on the Automation Device (AD) and designed such, in particular based on an "APP capsule app", that
(**a**) it is used for managing and operating the execution of a single Production Step (PS, PSₙ₋₂, PSₙ₋₁, PSₙ) on the single Production Unit (PU, PU_{X}, PU_{Y}, PU_{Z}) in a Production Process Network (PPN) between
**(a1)** at least one Resource Buffer (RB, RB₁, RB₂, RB₃) of the Production Unit (PU, PU_{X}, PU_{Y}, PU_{Z}) for storing each an Input (IP), in particular Raw Material (RM), Single Production Parts or Assembled Production Parts, for the Production Step (PS, PSₙ₋₂, PSₙ₋₁, PSₙ) on the Production Level (PL, PLₘ, PLₘ₋₁) or for storing each at least one Output (OP), in particular Single Production Parts (SPP, SPP1, SPP2, SPP3) or Assembled Production Parts (APP, APP1, APP2), of at least one Production Step preceding to the Production Step (PS, PSₙ₋₂, PSₙ₋₁, PSₙ) and
**(a2)** at least one Output Buffer (OB, OB1, OB2) of the Production Unit (PU, PU_{X}, PU_{Y}, PU_{Z}) for storing an Output (OP), in particular Single Production Parts (SPP, SPP1, SPP2, SPP3) or Assembled Production Parts (APP, APP1, APP2), of the Production Step (PS, PSₙ₋₂, PSₙ₋₁, PSₙ) on the Production Level (PL, PLₘ, PLₘ₋₁),
**(b)** it is loadable or implementable into the Control Sub-System (CSS),
**(c)** a set of Interaction-Interfaces (IIF, IIF_{D}) and Dependencies (DPD) for interaction with at least the Control Sub-System (CSS) and/or at least another Managing/Operating-Program Module of other single Production Units (PU, PU_{X}, PU_{Y}, PU_{Z}) executing preceding or subsequent Production Steps to the single Production Step (PS, PSₙ₋₂, PSₙ₋₁, PSₙ) are assigned to the Managing/Operating-Program Module (MOPM),
**(d)** the Managing/Operating-Program Module (MOPM) is hosting via Host-Interfaces (HIF) at least one Coordinating Program Module (CPM), which
**(d1)** encapsulates a domain-specific or project-specific logic to translate production plans or goals into recommendations for local activities of the single Production Step (PS, PSₙ₋₂, PSₙ₋₁, PSₙ) and for coordination events with the at least one preceding Production Step to the single Production Step (PS, PSₙ₋₂, PSₙ₋₁, PSₙ) and at least one subsequent Production Step to the single Production Step (PS, PSₙ₋₂, PSₙ₋₁, PSₙ),
**(d2)** provides a set of functionalities stemming from the Dependencies (DPD), in particular from a first Dependency (DPD-1) querying production goals, a second Dependency (DPD-2) querying process images, a third Dependency (DPD-3) querying buffer information, a fourth Dependency (DPD-4) querying production wishes and a fifth Dependency (DPD-5) querying production possibilities, and
**(d3)** implements the set of Interaction-Interfaces (IIF), in particular concerning the set a first Interaction-Interface (IIF-1) for deploying the at least one Coordinating Program Module (CPM), a second Interaction-Interface (IIF-2) for querying production possibilities, a third Interaction-Interface (IIF-3) for querying next items to be produced on the single Production Unit (PU, PU_{X}, PU_{Y}, PU_{Z}),
**(e)** the Managing/Operating-Program Module (MOPM) **(e1)** retrieves information available through the defined Dependencies (DPD, DPD-1...DPD-5),
**(e2)** provides this information to the Coordination Program Module (CPM) and
**(e3)** outputs computation results of the Coordination Program Module (CPM) through the Interaction-Interfaces (IIF, IIF-1...IIF-3).

11. Digital Tool (DT) according to claim 10, **characterized in that**
the Managing/Operating-Program Module (MOPM) is designed such that it is used for managing and operating the execution of the Production Step (PS) in the Production Process Network (PPN) for inter-level acting of a dedicated single Production Unit (PU_{Z}) on a m-th Production Level (PLₘ) of the Production Levels (PL₁...PLᵢ) with 1≤m≤i in a n-th single Production Step (PSₙ) of the Production Steps (PS₁...PSⱼ) with 1≤n≤j between at least one dedicated Resource Buffer (RB₁, RB₂, RB₃) for storing each at least one Input (IP), in particular Single Production Parts (SPP, SPP1, SPP2, SPP3) or Assembled Production Parts (APP, APP1, APP2), of at least one Production Step (PSₙ₋₁, PSₙ₋₂,...) of the Production Steps (PS₁...PSⱼ) with 1≤n≤j preceding to the n-th single Production Step (PSₙ) on a <m-1>-th Production Level (PLₘ₋₁) of the Production Levels (PL₁...PLᵢ) with 1≤m≤i preceding to the m-th Production Level (PLₘ) and at least one dedicated Output Buffer (OB1, OB2) for storing an Output (OP), in particular Assembled Production Parts (APP, APP1, APP2) or Extended Assembled Production Parts, of the m-th Production Level (PLₘ) as an inter-level Output (OP_{IT-L}).

12. Digital Tool (DT) according to claim 10, **characterized in that**
the Managing/Operating-Program Module (MOPM) is designed such that it is used for managing and operating the execution of the Production Step (PS) in the Production Process Network (PPN) for intra-level acting of a first dedicated single production unit (PU_{X}) or a second dedicated single Production Unit (PU_{Y}) on a <m-1>-th Production Level (PLₘ₋₁) of the Production Levels (PL₁...PLᵢ) with 1≤m≤i in a <n-2>-th single Production Step (PSₙ₋₂) respectively a <n-1>-th single Production Step (PSₙ₋₁) of the production steps (PS₁...PSⱼ) with 1≤n≤j between each at least one dedicated Resource Buffer (RB) for storing each an Input (IP), in particular Raw Material (RM), Single Production Parts or Assembled Production Parts, and each at least one dedicated Output Buffer (OB) for storing each an Output (OP), in particular Single Production Parts (SPP, SPP1, SPP2, SPP3), Assembled Production Parts or Extended Assembled Production Parts, as an intra-level Output (OP_{ITR-L}).

13. Digital Tool (DT) according to one of the claims 10 to 12, **characterized in that**
the Managing/Operating-Program Module (MOPM) is remote loadable regarding its Module-functionality, if the Automation Device (AD) hosting the Control Sub-System (CSS) allows remote loading of program modules, and gives access to information required therefore, in particular to the Interaction-Interfaces (IIF, IIF_{D}) and the Dependencies (DPD).

14. Digital Tool (DT) according to claim 13, **characterized in that**
the Module-functionality is coded statically into the Automation Device (AD), if the Automation Device (AD) hosting the Control Sub-System (CSS) does not allow remote loading of program modules.

15. Digital Tool (DT) according to one of the claims 10 to 14, **characterized in that**
the Managing/Operating-Program Module (MOPM) includes a communication functionality, in particular a first Interaction-Interface (IIF-1) for deploying the at least one Coordinating Program Module (CPM), for enabling the at least one Coordinating Program Module (CPM) to communicate with other Coordinating Program Modules hosted by other Managing/Operating-Program Modules of other single Production Units (PU, PU_{X}, PU_{Y}, PU_{Z}) executing preceding or subsequent Production Steps to the single Production Step (PS, PSₙ₋₂, PSₙ₋₁, PSₙ) either directly in a format defined by the at least one Coordinating Program Module (CPM) or indirectly by logical events defined by the Managing/Operating-Program Module (MOPM) as long as the Automation Device (AD) allows the Managing/Operating-Program Module (MOPM) to communicate with other Managing/Operating-Modules on other Automation Devices.

16. Digital Tool (DT) according to claim 15, **characterized in that**
the communication functionality, in particular the first Interaction-Interface (IIF-1) for deploying the at least one Coordinating Program Module (CPM), is designed such that information of the plant (PLT), in particular at least one of layout information, buffer states information, information concerning logical dependencies between production units, levels of production steps and production steps, is provided to via the communication functionality to the at least one Coordinating Program Module (CPM).

17. Digital Tool (DT) according to claim 15 or 16, **characterized in that**
the communication functionality is designed such that the at least one Coordinating Program Module (CPM) is enabled via the communication functionality to perform at least one of production process optimization in industrial plants or interconnected medical systems and operation optimization in plants that are similar to industrial plants or interconnected medical systems.

18. Digital Tool (DT) according to one of the claims 10 to 16, **characterized in that**
the Managing/Operating-Program Module (MOPM) includes a dedicated Interaction-Interface (IIF_{D}) of the set of Interaction-Interfaces (IIF) for configuring production goals, if the production goals cannot be hard coded in the at least one Coordinating Program Module (CPM).

19. Automation Device (AD) for managing and operating job shop type of production within the infrastructure of a plant (PLT), in particular industrial plants or interconnected medical systems, which comprises at least one Production Unit (PU, PU_{X}, PU_{Y}, PU_{Z}) acting on a Production Level (PL, PLₘ, PLₘ₋₁) of a number "i" of Production Levels (PL₁...PLᵢ) such that the Production Unit (PU, PU_{X}, PU_{Y}, PU_{Z}) is executing on the Production Level (PL, PLₘ, PLₘ₋ᵢ) at least one Production Step (PS, PSₙ₋₂, PSₙ₋₁, PSₙ) of a number "j" of Production Steps (PS₁...PSⱼ), hosting a Control Sub-System (CSS) of the production unit (PU, PU_{X}, PU_{Y}, PU_{Z}), being deployable a single Production Unit (PU, PU_{X}, PU_{Y}, PU_{Z}), **characterized by**:
A Control Sub-System (CSS) including particularly at least one Programmable Logic Controller (PLC) or an "Industrial PC" (IPC) and executing a Managing/Operating-Program Module (MOPM), in particular based on an "APP capsule app", which is hosted by the Control Sub-System (CSS) and running on the at least one Programmable Logic Controller (PLC) or an Industrial PC (IPC), such that for managing and operating the job shop type of production
(**a**) the Managing/Operating-Program Module (MOPM), which is loaded or implemented into the Control Sub-System (CSS), is executed for managing and operating the execution of a single Production Step (PS, PSₙ₋₂, PSₙ₋₁, PSₙ) on the single Production Unit (PU, PU_{X}, PU_{Y}, PU_{Z}) in a Production Process Network (PPN) between
**(a1)** at least one Resource Buffer (RB, RB₁, RB₂, RB₃) of the Production Unit (PU, PU_{X}, PU_{Y}, PU_{Z}) for storing each an Input (IP), in particular Raw Material (RM), Single Production Parts or Assembled Production Parts, for the Production Step (PS, PSₙ₋₂, PSₙ₋₁, PSₙ) on the Production Level (PL, PLₘ, PLₘ₋₁) or for storing each at least one Output (OP), in particular Single Production Parts (SPP, SPP1, SPP2, SPP3) or Assembled Production Parts (APP, APP1, APP2), of at least one Production Step preceding to the Production Step (PS, PSₙ₋₂, PSₙ₋₁, PSₙ) and
**(a2)** at least one Output Buffer (OB, OB1, OB2) of the Production Unit (PU, PU_{X}, PU_{Y}, PU_{Z}) for storing an Output (OP), in particular Single Production Parts (SPP, SPP1, SPP2, SPP3) or Assembled Production Parts (APP, APP1, APP2), of the Production Step (PS, PSₙ₋₂, PSₙ₋₁, PSₙ) on the Production Level (PL, PLₘ, PLₘ₋₁),
**(b)** a set of Interaction-Interfaces (IIF, IIF_{D}) and Dependencies (DPD) for interaction with at least the Control Sub-System (CSS) and/or at least another Managing/Operating-Program Module of other single Production Units (PU, PU_{X}, PU_{Y}, PU_{Z}) executing preceding or subsequent Production Steps to the single Production Step (PS, PSₙ₋₂, PSₙ₋₁, PSₙ) are used,
**(c)** at least one Coordinating Program Module (CPM) hosted by the Managing/Operating-Program Module (MOPM) via Host-Interfaces (HIF) is used such that the Coordinating Program Module (CPM)
**(d1)** encapsulates a domain-specific or project-specific logic to translate production plans or goals into recommendations for local activities of the single Production Step (PS, PSₙ₋₂, PSₙ₋₁, PSₙ) and for coordination events with the at least one preceding Production Step to the single Production Step (PS, PSₙ₋₂, PSₙ₋₁, PSₙ) and at least one subsequent Production Step to the single Production Step (PS, PSₙ₋₂, PSₙ₋₁, PSₙ),
**(d2)** provides a set of functionalities stemming from the Dependencies (DPD), in particular from a first Dependency (DPD-1) querying production goals, a second Dependency (DPD-2) querying process images, a third Dependency (DPD-3) querying buffer information, a fourth Dependency (DPD-4) querying production wishes and a fifth Dependency (DPD-5) querying production possibilities, and
**(d3)** implements the set of Interaction-Interfaces (IIF), in particular concerning the set a first Interaction-Interface (IIF-1) for deploying the at least one Coordinating Program Module (CPM), a second Interaction-Interface (IIF-2) for querying production possibilities, a third Interaction-Interface (IIF-3) for querying next items to be produced on the single Production Unit (PU, PU_{X}, PU_{Y}, PU_{Z}),
**(e)** the Managing/Operating-Program Module (MOPM) is executed such it
**(e1)** retrieves information available through the defined Dependencies (DPD, DPD-1...DPD-5),
**(e2)** provides this information to the Coordination Program Module (CPM) and
**(e3)** outputs computation results of the Coordination Program Module (CPM) through the Interaction-Interfaces (IIF, IIF-1...IIF-3).

20. Automation Device (AD) according to claim 19, **characterized in that**
the Control Sub-System (CSS) is executing the Managing/Operating-Program Module (MOPM) such that it is used for managing and operating the execution of the Production Step (PS) in the Production Process Network (PPN) for inter-level acting of a dedicated single Production Unit (PU_{Z}) on a m-th Production Level (PLₘ) of the Production Levels (PL₁...PLᵢ) with 1≤m≤i in a n-th single Production Step (PSₙ) of the Production Steps (PS₁...PSⱼ) with 1≤n≤j between at least one dedicated Resource Buffer (RB₁, RB₂, RB₃) for storing each at least one Input (IP), in particular Single Production Parts (SPP, SPP1, SPP2, SPP3) or Assembled Production Parts (APP, APP1, APP2), of at least one Production Step (PSₙ₋₁, PSₙ₋₂,...) of the Production Steps (PS₁...PSⱼ) with 1≤n≤j preceding to the n-th single Production Step (PSₙ) on a <m-1>-th Production Level (PLₘ₋₁) of the Production Levels (PL₁...PLᵢ) with 1≤m≤i preceding to the m-th Production Level (PLₘ) and at least one dedicated Output Buffer (OB1, OB2) for storing an Output (OP), in particular Assembled Production Parts (APP, APP1, APP2) or Extended Assembled Production Parts, of the m-th Production Level (PLₘ) as an inter-level Output (OP_{IT-L}).

21. Automation Device (AD) according to claim 19, **characterized in that**
the Control Sub-System (CSS) is executing the Managing/Operating-Program Module (MOPM) such that it is used for managing and operating the execution of the Production Step (PS) in the Production Process Network (PPN) for intra-level acting of a first dedicated single production unit (PU_{X}) or a second dedicated single Production Unit (PU_{Y}) on a <m-1>-th Production Level (PLₘ₋₁) of the Production Levels (PL₁...PLᵢ) with 1≤m≤i in a <n-2>-th single Production Step (PSₙ₋₂) respectively a <n-1>-th single Production Step (PSₙ₋₁) of the production steps (PS₁...PSⱼ) with 1≤n≤j between each at least one dedicated Resource Buffer (RB) for storing each an Input (IP), in particular Raw Material (RM), Single Production Parts or Assembled Production Parts, and each at least one dedicated Output Buffer (OB) for storing each an Output (OP), in particular Single Production Parts (SPP, SPP1, SPP2, SPP3), Assembled Production Parts or Extended Assembled Production Parts, as an intra-level Output (OP_{ITR-L}).
